# EUROPEAN PATENT APPLICATION

(11) **EP 4 239 016 A1**
(43) Date of publication of application: **06.09.2023**
(21) Application number: 23153769.7
(22) Date of filing: 27.01.2023
(51) Int. Cl.: C08J 7/04, B43L 1/00, C09D 153/00, C09D 153/02, C08L 53/02

(54) **ERASABLE AND REUSABLE MARKING SURFACE**

(30) Priority: 09.02.2022 US 202263267731 P
(71) Applicant: Kraton Polymers Nederland B.V., 1322 CE Almere (NL)
(72) Inventor: WRIGHT, Kathryn J., Houston, Texas 77084 (US); PEDDINTI, Bharadwaja, Houston, Texas 77084 (US); NIADA, Felipe, Houston, Texas 77084 (US)
(74) Representative: Henkel & Partner mbB

(57) **Abstract**

An erasable laminate for marking is disclosed. The laminate comprises a substrate with a marking surface, allowing a user to provide markings on the marking surface using the marking material. The marking surface comprises an outer layer containing a sulfonated block copolymer having an ion exchange capacity (IEC) of > 0.5 meq/g. At least 50% of the markings can be erased from the marking surface with a wipe moist with a cleaning fluid (e.g., water, isopropyl alcohol, etc.) after wiping for less than 5 min. The laminate with erasable and reusable marking surface can be used for obtaining writing instruments, e.g., notebooks, artist easels, sketches, etc.

## Description

### TECHNICAL FIELD

The disclosure relates to an erasable and reusable marking surface suitable for marking with marking materials as handwritten notes, drawings, painting, sketches, etc., and can be quickly erased with a cleaning fluid.

### BACKGROUND

Writings, drawings, paintings, sketches, etc., are typically made as markings on a surface, such as pages of a notebook or on an artist easel, with inks, paints, dyes, coloring, etc. Once the surface is marked with such inks, the surface is generally not reused. For example, students typically need to purchase new notebooks every school year for taking notes in classes.

US Patent No. 11,001,094 discloses a moisture-reusable notebook system, wherein the ink marking can be removed by moisture. However, the system only works with a special kind of ink, e.g., thermochromic ink, as in a FRIXION^{™} pen. The thermochromic ink refers to a temperature-sensitive ink that temporarily changes color with exposure to heat. Attempts have been made to migrate the marking or writing to other formats, such as digital tablet devices. However, these devices are expensive, and adoption of such devices are limited.

There is still a need for reusable surfaces which can be reused for writings, drawing, paintings, etc., by quickly erasing or removing markings, e.g., drawing, paintings, etc., with convenient and easy means, e.g., a wipe moistened or soaked with water, or a diluted isopropyl alcohol wipe, and the like. Additionally, erasing markings from the marking surface does not require the use of a specific marking instrument or the ink.

### SUMMARY

In a first aspect, a laminate for marking is disclosed, comprising, consisting essentially of, or consists of a substrate having a marking surface to facilitate markings with a marking material. The marking surface comprises an outer layer containing a sulfonated block copolymer. The sulfonated block copolymer has an ion exchange capacity (IEC) of at least 0.5 meq/g. The outer layer containing the sulfonated block copolymer has a thickness of at least 1 µm. At least 50% markings can be erased from the marking surface with a wipe moist with a cleaning fluid after wiping for less than 5 min.

In a second aspect, the cleaning fluid is selected from the group consisting of water, isopropyl alcohol, rubbing alcohol, acetone, and mixtures thereof.

In a third aspect, the sulfonated block copolymer has a degree of sulfonation of 10 to 100 mol %.

In a fourth aspect, at least 80% of markings can be erased from the marking surface with a wipe moist with the cleaning fluid after wiping for less than 2 min.

### DESCRIPTION OF THE DRAWINGS

FIG. 1A-1F are photographs showing embodiment of marking surfaces after markings with various types of inks, and being wiped clean with different cleaning fluids.
FIG. 2A-2H are photographs showing erasability and reusability of marking surfaces after printing with an inkjet printer, and the surfaces being reused for a second print.
FIG. 3A-3D are photographs illustrating the erasability of embodiments of marking surfaces before and after applications with various paint types.
FIG. 4 illustrates a sectional view of a marking surface having a substrate coated / laminated with an outer layer of a sulfonated block copolymer.
FIG. 5 illustrates an embodiment of a notebook having a plurality of pages in the form of a marking surface coated with a sulfonated block copolymer.
FIG. 6 illustrates an embodiment of an erase board having a marking surface.
FIG. 7 illustrates an embodiment of a handheld writing board having a marking surface.
FIG. 8 illustrates an embodiment of a writing board having a marking surface.
FIG. 9 illustrates an embodiment of a display sign having a marking surface.
FIG. 10 is an embodiment of a rollable writing structure with a marking surface.

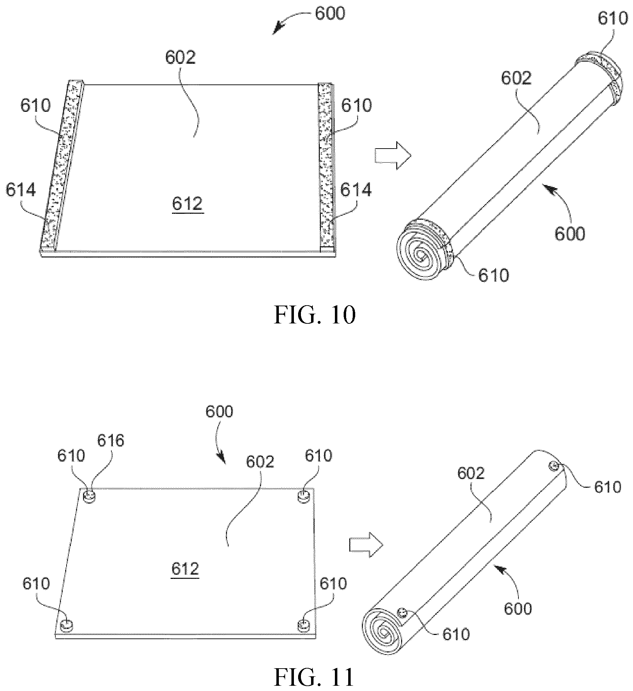

FIG. 10 is yet another embodiment of a rollable writing structure.

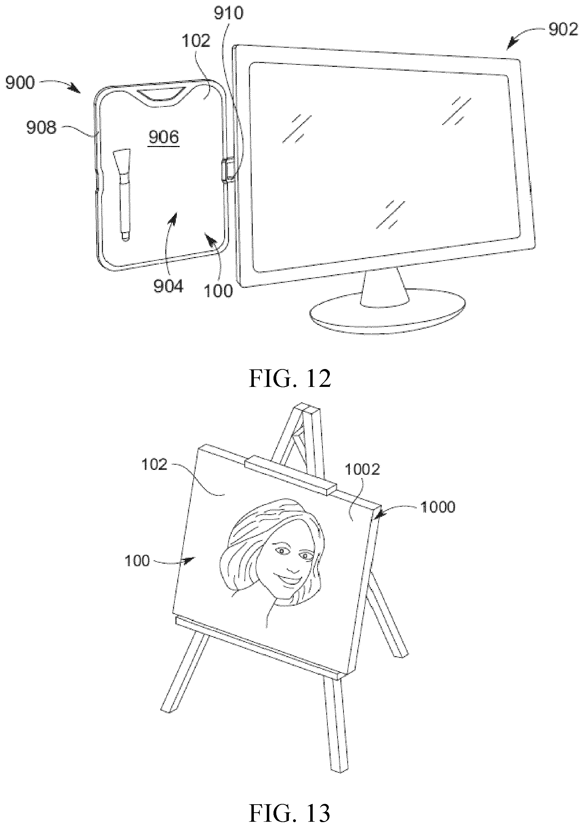

FIG. 12 illustrates an embodiment of a clip board having a marking surface.
FIG. 13 illustrates an embodiment of an artist easel with a marking surface.

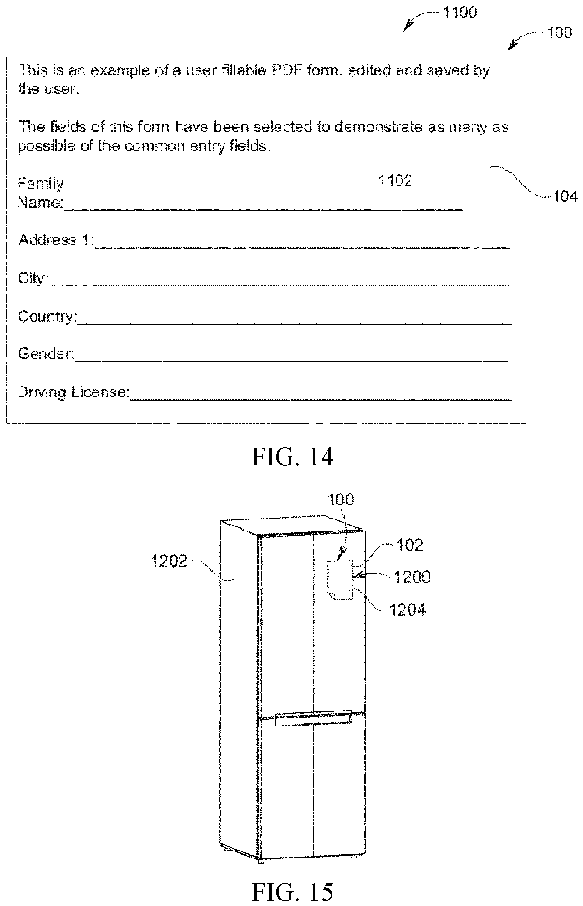

FIG. 14 illustrates an embodiment of a fillable form having a marking surface.
FIG. 15 illustrates an embodiment of a sticky note having a marking surface for attachment or posting on a surface, e.g., a refrigerator door.

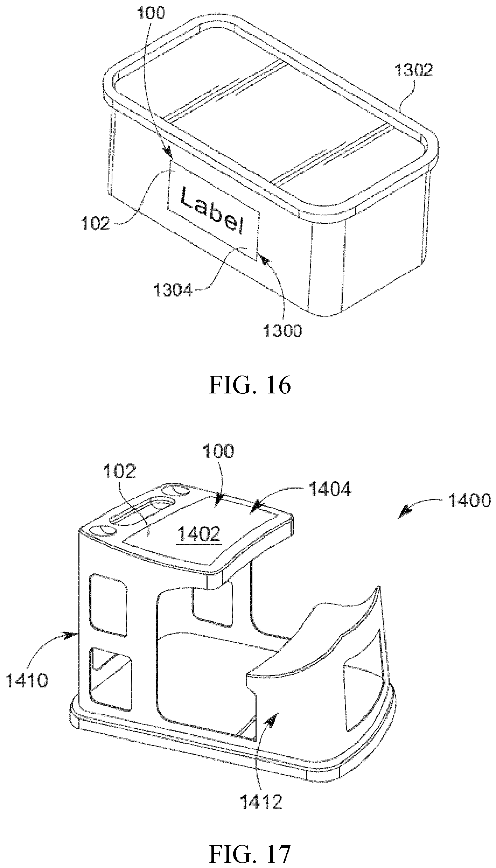

FIG. 16 illustrates an embodiment of a label having a marking surface for a storage container.
FIG. 17 illustrates an embodiment of a desk having a marking surface as a top surface.

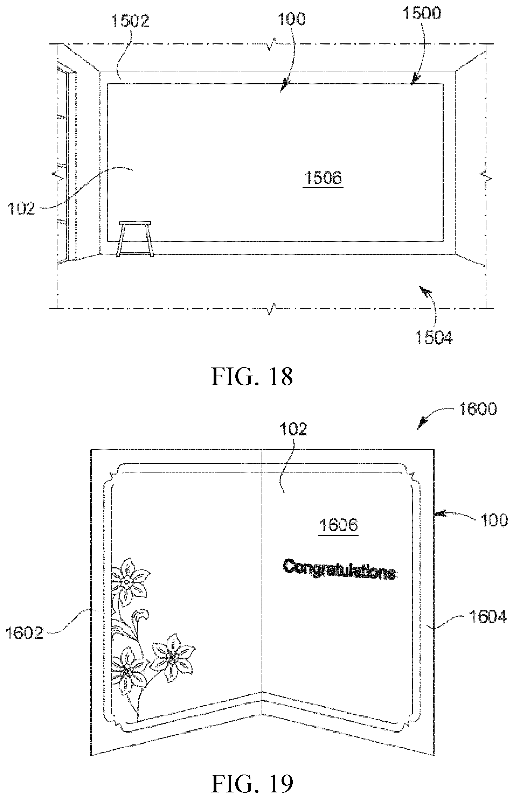

FIG. 18 illustrates an embodiment of a wallpaper having a marking surface.
FIG. 19 illustrates an embodiment of a greeting card having a marking surface.

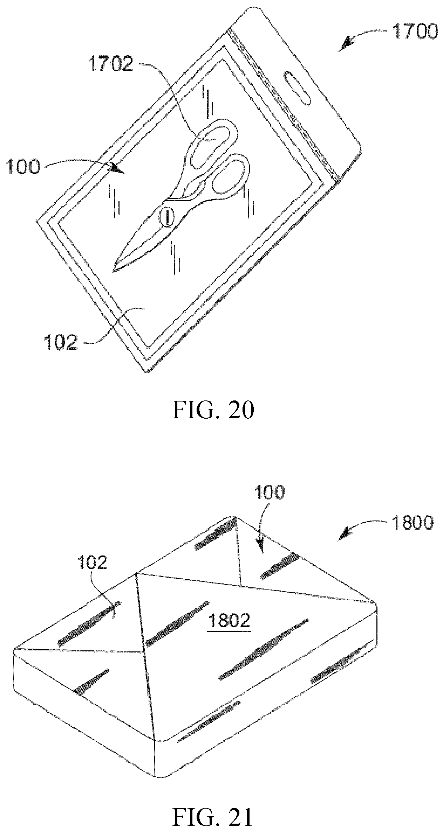

FIG. 20 illustrates an embodiment of a surgical pouch with a marking surface.
FIG. 21 illustrates an embodiment of a package wrapper with a marking surface.

### DETAILED DESCRIPTION

The following terms will be used throughout the specification:
"Laminate" refers to an object having at least one layer of the same or different materials.

"Substrate" means a layer or a structure of one or more materials on which a subsequent layer or coating is deposited, or adhered to, or arranged together forming a laminate.

"Marking material" refers to a gel, solvent, or solution that contains at least one colorant, such as a dye or pigment, and is used to color a surface to produce an image, text, a painting, or design. The marking material is used for painting, drawing, or writing with pen, brush, reed pen, or quill. As used herein, the marking material can be used interchangeably with ink or paint or colorant, in reference to markings made on a marking surface or substrate.

"Mark" or "Marking" means writing as with words, designs, pictures, drawings, or paintings provided on a surface or a substrate, using a marking material.

"Cleaning fluid" refers to a fluid that can facilitate removal of a pre-existing ink or markings from a surface with a wipe moist with the cleaning fluid. The cleaning fluid can be selected based on the type of the ink is used, and / or the time duration for which the ink has dried on the surface.

"Wipe" means a flexible sheet, a piece of fabric, a paper, a towel, or a sponge that can partially or fully absorb a fluid, for the removal or erase of a marking on a surface.

"Peel-and-stick" or "peel-and-stick film" refers to a laminate having at least two layers, a release layer or liner which can also be a support layer, and another layer for "sticking" or laying down on a surface. The peel-and-stick can be self-adhesive, or releasable or peelable, or removable after being attached to a surface.

"Releasable" or "separable" bond in the context of layers or surfaces means that the layers or surfaces are generally attached or fastened to each other yet can be separated with the application of a certain amount of force. In order to be "releasable," or "separable" the surfaces must be capable of being fastened and separated, and the force applied to separate the layers or surfaces can be applied by hand.

"Surface pH" refers to a pH on a contact surface, which results from surface bound moieties e.g., the outer most or surface layer. Surface pH can be measured with commercial surface pH measuring instruments, e.g., SenTix^{™} Sur-electrode from WTW Scientific-Technical Institute GmbH, Weilheim, Germany.

"Erasable" (or erasability) means having > 50%, or > 60%, or > 70%, or > 80%, or > 90%, or up to 100% of a marking material erased or removed from a marking surface, after the first wiping or first rubbing of the marking surface for < 5 min, or < 2 min, or < 1 min, with a wipe moist with a cleaning fluid.

"Moist wipe" refers to a wipe substrate containing a liquid or a gel applied thereto so that a sufficient amount of liquid / gel is retained on or within the wipe substrate until its utilization by a user, for the wipe to be damp or slightly damp to the user upon touching. The liquid / gel can be applied to the wipe substrate by impregnation, coating, immersing, dipping, sinking, drench, covering, rinsing, wetting, absorbing, and the like.

"Susceptible to sulfonation" refers to a polymer, polymer block, compound, monomer, oligomer, etc., being predisposed, or sensitive, or capable of reaction with sulfur containing compound, e.g., SO₃, H₂SO₄, etc., under conditions conventionally employed for sulfonation, wherein sulfonation is very likely to occur to obtain a sulfonated product. In embodiments, a polymer block "susceptible to sulfonation" upon sulfonation, the degree of sulfonation is at least 10 mol%, or at least 20 mol%, or at least 30, or at least 50 mol%, or at least 75 mol%, of the total polymer block, for the polymer block to have at least 10 mol%, or at least 20 mol%, or at least 30, or at least 50 mol%, or at least 75 mol% sulfonic acid or sulfonate ester functional groups.

"Resistant to sulfonation" means having little if any sulfonation of the respective block under conditions conventionally employed for sulfonation, with < 10 mol%, or < 8 mol%, or < 5 mol% sulfonic acid or sulfonate ester functional groups in the polymer block.

"Sulfonated styrenic block polymer" or SSBC refers to a styrenic block copolymer precursor which contains sulfonic acid and / or sulfonate ester groups.

The disclosure relates to a laminate for marking which contains a substrate with a marking surface to facilitate markings on the marking surface using a marking material. The marking surface comprises an outer layer containing a sulfonated block copolymer. At least 50% of the marking material can be removed from the marking surface with a wipe moist with a cleaning fluid.

### (Sulfonated Block Copolymer)

The sulfonated block copolymer refers to polymers having a sulfonate group, e.g., -SO₃, either in the acid form (e.g., -SO₃H, sulfonic acid) or a salt form (e.g., -SO₃Na). The term "sulfonated block copolymer" also covers sulfonate containing polymers, e.g., polystyrene sulfonate.

The sulfonate group containing polymers other than the sulfonated block copolymer can be used, such as, for example, perfluorosulfonic acid polymers (e.g., sulfonated tetrafluoroethylene), sulfonated polyolefins, sulfonated polyimides, sulfonated polyamides, sulfonated polyesters, polystyrene sulfonates, sulfonated polysulfones such as polyether sulfone, sulfonated polyketones such as polyether ether ketone, sulfonated polyphenylene ethers, and mixtures thereof.

In embodiments, the sulfonated block copolymer is characterized as being sufficiently sulfonated, meaning having at least 10 mol% of sulfonic acid or sulfonate ester functional groups based on total mol of the number of monomer units or polymer blocks to be sulfonated ("degree of sulfonation"). In embodiments, the sulfonated block copolymer has a degree of sulfonation of at least 10 mol%, or > 15, or > 20, or > 25, or > 30, or > 40, or > 50, or > 60, or 10 - 100, or 15 - 95, or 20 - 90, or 25 - 85, or 30 - 80, or 35 - 75 mol%, based on polymer blocks susceptible to sulfonation. The degree of sulfonation can be calculated by NMR or ion exchange capacity (IEC).

In embodiments, the sulfonated block copolymer is a sulfonated styrenic block copolymer (SSBC) obtained by sulfonation of a styrenic block copolymer (SBC) precursor which is any of linear, branched, or radial block copolymer having at least one end block A and at least one interior block B. The sulfonated block copolymer has at least a sulfonate group, e.g., -SO₃, either in an acid form (e.g., -SO₃H, sulfonic acid) or a salt form (e.g., -SO₃Na). The sulfonate group can be in the form of metal salt, ammonium salt, or amine salt.

In embodiments, the SBC precursor is prepared by anionic polymerization using techniques known in the art. Other methods, such as cationic polymerization, can also be employed. The anionic polymerization initiator is generally an organometallic compound, such as, an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 to 5 wt.%, based on the amount of monomers to be polymerized. Suitable solvent for the polymerization includes aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, and mixtures thereof. Polymer chain termination can be achieved by quenching with a proton donor or a compound having a leaving group that can be displaced by the carbanionic polymer chain.

If desired, a Lewis base additive, which affects polymerization parameters can also be employed. Examples of Lewis bases include dimethyl ether, diethyl ether, ethylene glycol dimethyl ether, 1,2-diethoxypropane, diethylene glycol dimethyl ether, tetrahydrofuran, tetrahydrofurfuryl ethers, such as tetrahydrofurfuryl methyl ether, and tertiary amines. The additives can influence the extent of 1,2-addition of the conjugated diene, and therefore the vinyl group content in the respective block.

In embodiments, the SBC precursor has a general configuration of: A-B-A, (A-B)ₙ(A), (A-B-A)ₙ, (A-B-A)ₙX, (A-B)ₙX, A-D-B, A-B-D, A-D-B-D-A, A-B-D-B-A, (A-D-B)ₙA, (A-B-D)ₙA (A-D-B)ₙX, (A-B-D)ₙX, (A-D-B-D-A)ₙX, (A-B-D-B-A)ₙX or mixtures thereof; where n is an integer from 2 to 30; and X is a residue of a coupling agent. Each block A and D is resistant to sulfonation, and each block B is susceptible to sulfonation.

In embodiments, the coupling agent X includes bi- or polyfunctional compounds, for example divinylbenzene, halides of aliphatic or araliphatic hydrocarbons, such as 1,2-dibromoethane, bis(chloromethyl)benzene, or silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane (MTMS), methyltriethoxysilane (MTES), tetramethoxysilane (TMOS), dimethyladipate, gamma-glycidoxypropyltrimethoxy silane, and mixtures thereof.

In embodiments, the block A has at least one compound selected from polymerized (i) para-substituted styrene, (ii) ethylene, (iii) alpha olefins of 3 to 18 carbon atoms; (iv) 1,3-cyclodiene, (v) conjugated dienes having a vinyl content of < 35 mol% prior to hydrogenation, (vi) acrylic esters, (vii) methacrylic esters, and (viii) mixtures thereof. If the block A is a polymer of 1,3-cyclodiene or conjugated diene, the block A will be hydrogenated subsequent to preparation of the SBC and before sulfonation of the SBC precursor. In embodiments, the block A contains up to 15 wt.% of vinyl aromatic monomers such as those present in the block B.

In embodiments, the block A is derived from polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof.

In embodiments, the block A has a Mₚ of 1 - 60, or 2 - 50, or 5 - 45, or 8 - 40, or 10 - 35, or > 1.5, or < 50 kg/mol. In embodiments, the block A constitutes from 1 - 80, or 5 - 75, or 10 - 70, or 15 - 65, or 20 - 60, or 25 - 55, or 30 - 50, or > 10, or < 75 wt.%, based on total weight of the SBC precursor.

In embodiments, the block B is derived from polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof. In embodiments, the block B has a mixture of the vinyl aromatic monomer and hydrogenated conjugated dienes, such as butadiene or isoprene, having a vinyl content, prior to hydrogenation, of 2 - 40, or 5 - 38, or 8 - 35, or 10 - 30, or > 5, or < 40 wt.%, based on total weight of polymerized conjugated diene monomers in the block B.

In embodiments, the block B has a Mₚ of 10 - 300, or 20 - 250, or 30 - 200, or 40 - 150, or 50 - 100, or 60 - 90, or > 15, or < 150 kg/mol. In embodiments, the block B constitutes from 10 - 80, or 15 - 75, or 20 - 70, or 25 - 65, or 30 - 55, or > 10, or < 75 wt.%, based on total weight of the SBC precursor. In embodiments, the block B has from 0 - 25, or 2 - 20, or 5 - 15 wt.%, of the para-substituted styrene monomers such as those present in the block A.

In embodiments, the block D is derived from a polymer or copolymer of a conjugated diene monomer selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof. In embodiments, the block D has a Mₚ of 1 - 60, or 2 - 50, or 5 - 45, or 8 - 40, or 10 - 35, or 15 - 30, or > 1.5, or < 50 kg/mol. In embodiments, the block D constitutes from 10 - 80, or 15 - 75, or 20 - 70, or 25 - 65, > 10, or < 75 wt.%, based on total weight of the SBC precursor.

In embodiments, prior to hydrogenation and sulfonation, the block D has a vinyl content of > 80, or > 85, or > 90, or > 95, or > 98, or > 99, or > 99.5, or 50 - 95, or 60 - 90, or 70 - 95 wt.%, based on total weight of the polymerized conjugated diene monomers in the block D.

In embodiments, the block D has a hydrogenation level of 60 - 99%, or 65 - 95%, or 70 - 90%, or 75 - 99%, or > 75%, or 85%, or > 95%, or > 98%.

In embodiments, each block A and B independently has a hydrogenation level of 0 - 20%, or 2 - 18%, or 4 - 15%, or > 10%, or > 15%, or < 20%. A suitable catalyst based on nickel, cobalt or titanium can be used in the hydrogenation step.

The SBC precursor is sulfonated to provide the corresponding SSBC. Sulfonation occurs at the phenyl ring of polymerized styrene units in the block B, predominantly para to the phenyl carbon atom bonded to the polymer backbone. In embodiments, the block B has a degree of sulfonation of 10 - 100, or 15 - 95, or 20 - 90, or 25 - 85, or 30 - 80, or 35 - 75, or 40 - 70, or > 15, or < 85 mol%, based on total mol of the block B.

In embodiments, the sulfonated block copolymer is a midblock-sulfonated triblock copolymer, or a midblock-sulfonated pentablock copolymer, e.g., a poly(p-tert-butylstyrene-b- styrenesulfonate-b-p-tert-butylstyrene), or a poly[tert-butylstyrene-b-(ethylene-alt-propylene)-b-(styrenesulfonate)-b-(ethylene-alt-propylene)-b-tert-butylstyrene.

In embodiments, the sulfonated block copolymer has a Mₚ of 25 - 500, or 30 - 450, or 350 - 400, or 40 - 350, or 45 - 300, or 50 - 250, or > 35, or < 350 kg/mol.

In embodiments, the sulfonated block copolymer has an ion exchange capacity (IEC) of at least 0.5, or > 0.75, or > 1.0, or > 1.5, or > 2.0, or > 2.5, or < 5.0 or 0.5 - 3.5, or 1 - 2.6 meq/g.

In embodiments, the sulfonated block copolymer has a glass transition temperature (T_{g}) of 80 - 180°C, or 85 - 160°C, or 90 - 150°C, or 100 - 140°C, or > 90°C, or < 210°C, measured by Dynamic Mechanical Analysis (DMA), according to ASTM 4065.

The sulfonated block copolymer in embodiments is as disclosed in Patent Publication Nos. US9861941, US8263713, US8445631, US8012539, US8377514, US8377515, US7737224, US8383735, US7919565, US8003733, US8058353, US7981970, US8329827, US8084546, US8383735, and US10202494.

The properties of the sulfonated block copolymer can be varied and controlled by varying the amount of sulfonation, the degree of neutralization of the sulfonic acid groups to the sulfonated salts, as well as controlling the location of the sulfonated group(s). In embodiments, the sulfonated block copolymer is selectively sulfonated for desired water dispersity properties or mechanical properties, e.g., having the sulfonic acid functional groups attached to the inner blocks or middle blocks, or in the outer blocks of a copolymer, as in US Patent No. US8084546. If the outer (hard) blocks are sulfonated, upon exposure to water, hydration of the hard domains can result in plasticization of those domains and softening, allowing dispersion or solubility.

In embodiments, the sulfonated block copolymer has a general configuration A-B-(B-A)₁₋₅, wherein each block A is a non-elastomeric sulfonated vinyl aromatic polymer block and each block B is a substantially saturated elastomeric alpha-olefin polymer block, said block copolymer being sulfonated to an extent sufficient to provide at least 1% by weight of sulfur in the total polymer and up to one sulfonated constituent for each vinyl aromatic unit.

Depending on the applications and the desired properties, the sulfonated block copolymer can be modified (or functionalized). In embodiments, the sulfonated block copolymer is neutralized with any of various metal counterions, including alkali, alkaline earth, and transition metals, with at least 10% of the sulfonic acid groups being neutralized. In embodiments, the sulfonated block copolymer is neutralized with inorganic or organic cationic salts, e.g., those based on ammonium, phosphonium, pyridinium, sulfonium, and the like. Salts can be monomeric, oligomeric, or polymeric. In embodiments, the sulfonated block copolymer is neutralized with various primary, secondary, or tertiary amine-containing molecules, with > 10% of the sulfonic acid or sulfonate ester functional groups being neutralized.

In embodiments, the monomer or the block containing amine functionality or phosphine functionality can be neutralized with acids or proton donors, creating quaternary ammonium or phosphonium salts. In other embodiments, the sulfonated block copolymer containing tertiary amine is reacted with alkylhalides to form functional groups, e.g., quaternized salts. In some embodiments, the sulfonated block copolymer can contain both cationic and anionic functionality to form so-called zwitterionic polymers.

In embodiments, the sulfonic acid or sulfonate functional group is modified by reaction with an effective amount of polyoxyalkyleneamine having molecular weights from 140 to 10,000. Amine-containing neutralizing agents can be mono-functional or multi-functional; monomeric, oligomeric, or polymeric. In alternative embodiments, the sulfonated polymer is modified with alternative anionic functionalities, such as phosphonic acid or acrylic and alkyl acrylic acids.

In embodiments, amine containing polymers are used for the modification of the sulfonated block copolymers, forming members of a class of materials termed coaservates. In examples, the neutralizing agent is a polymeric amine, e.g., polymers containing benzylamine functionality. Examples include homopolymers and copolymers of 4-dimethylaminostyrene which has been described in US Patent 9,849,450. In embodiments, the neutralizing agents are selected from polymers containing vinylbenzylamine functionality, e.g., polymers synthesized from poly-p-methylstyrene containing block copolymers via a bromination-amination strategy, or by direct anionic polymerization of amine containing styrenic monomers. Examples of amine functionalities for functionalization include but are not limited to p-vinylbenzyldimethylamine (BDMA), p-vinylbenzylpyrrolidine (VBPyr), p-vinylbenzyl-bis(2-methoxyethyl)amine (VBDEM), p-vinylbenzylpiperazine (VBMPip), and p-vinylbenzyldiphenylamine (VBDPA). In embodiments, corresponding phosphorus containing polymers can also be used for the functionalization of the sulfonated polymers.

Other sulfonated block copolymer can be selected from sulfonated polystyrene-polyisoprene-polystyrene sulfonated in the center segment, sulfonated t-butylstyrene / isoprene random copolymer with C=C sites in their backbone, sulfonated SBR (styrene butadiene rubber) as disclosed in US 6,110,616, and mixtures thereof. In embodiments, the sulfonated block copolymer is a water dispersible BAB triblock, with B being a hydrophobic block such as alkyl or (if it is sulfonated, it becomes hydrophilic) poly(t-butyl styrene) and A being a hydrophilic block such as sulfonated poly(vinyl toluene) as disclosed in US 4,505,827.

In embodiments, the sulfonated block copolymer is a water-soluble polymer, a sulfonated diblock polymer of t-butyl styrene / styrene, or a sulfonated triblock polymer of t-butyl styrene -styrene - t-butyl styrene as disclosed in US 4,492,785 incorporated by reference.

### (Optional Additives)

The sulfonated block copolymer further comprises at least an additive selected from the group consisting of activators, curing agents, stabilizers, neutralizing agents, thickeners, coalescing agents, slip agents, release agents, antimicrobial agents, surfactants, antioxidants, antiozonants, color change pH indicators, plasticizers, tackifiers, film forming additives, dyes, pigments, UV stabilizers, UV absorbers, catalysts, fillers, other polymers, redox couples, fibers, flame retardants, viscosity modifiers, wetting agents, deaerators, toughening agents, adhesion promoters, colorants, heat stabilizers, light stabilizers, lubricants, flow modifiers, drip retardants, antiblocking agents, antistatic agents, processing aids, stress-relief additives, and mixtures thereof. Optional additives, if present, are in an amount of 0.1 - 20, or 0.5 - 15, or 1 - 10, or 0.1 - 5 wt.%, based on total weight of the sulfonated block copolymer.

### (Laminate for Marking)

The laminate for marking comprises a substrate for a marking surface, with a least a portion of the surface being coated with the sulfonated block copolymer. Depending on the end use application of the marking surface, e.g., as a notebook, a white board, an artist easel, etc., the substrate for the marking surface is made from any of synthetic paper, standard paper, waterproof paper, recycled paper, glass, plastic materials, canvas, wood, woven fabric, non-woven fabric, fibers, mixtures of fabric and paper, etc., with an outmost layer comprising the sulfonated block copolymer for writing or marking with a marking material.

In embodiments for use as a notebook, a pouch, a clipboard, a fillable form, the substrate comprises a synthetic material, e.g., polyester, polyolefins (e.g., polypropylene, high-density polyethylene, etc.), polyamide, polystyrene, polyester, polyurethane, polysulfone, polyvinylchloride, styrene-maleic anhydride copolymer, acrylic polymer and copolymer, polycarbonate, polyacrylonitrile, ethylene-vinyl acetate copolymers, and mixtures thereof.

In embodiments for use as a sticky note, a label, a wallpaper, a greeting card, the substrate is made of synthetic paper, standard paper, recycled paper, waterproof paper, fibers, fabric, or mixtures thereof. In embodiments, the substrate has an adhesive backing layer or an adhesive back face that is re-adherable for use as a sticky note or a sticky label.

In embodiments, for an erase board or white board for use in classrooms and conference rooms, the substrate comprises a panel of plastic or glass material, which is transparent or opaque. For the erase board or white board, the substrate can be made of wood, melamine, porcelain, slate, or similar material.

In embodiments, for use as an art board or an easel, the substrate is made from canvas, wood panel, paper materials, or a synthetic material, a polymer such as polyolefin, polycarbonate, acrylic, impact modified acrylic, polyvinyl chloride, or acrylonitrile butadiene styrene, and mixtures thereof.

In embodiments, for use in a rollable marking surface, the substrate comprises a rubber, an elastomeric, or any flexible and elastic material that can be rolled and then return to its original state once unraveled, and optionally a top layer of paper or white board material as mentioned above.

In some embodiments, e.g., as with a desk, the substrate is made of wood, metal, plastic, or any other suitable material known in the art for making furniture.

In embodiments, the outer layer containing the sulfonated block copolymer is formed on the marking surface by forming a coating with a composition comprising the sulfonated block copolymer partially or fully dissolved in a solvent in an amount of 1 to 10 wt.%, based on total weight of the solvent, or < 20, or < 50, or 5 - 30, or 1 - 15, or 10 - 20 wt.%. Non-limited examples of solvents include water, isopropyl alcohol, acetone, N,N-dimethylacetamide, 1-methyl-2-pyrrolidinone, 1,3-dioxolane, 2-methoxy ethanol, dimethylformamide, benzyl alcohol, cyclopentane, cyclohexane, cycloheptane, cyclooctane, hexane, heptane, nonane, decane, paraffinic oil, methyl-tert-butyl ether, tetrahydrofuran (THF), dioxan, ethyl acetate, dimethylsulfoxide (DMSO), dimethylformamide (DMF), methanol, ethanol, propanol, butanol, toluene, xylene, and mixtures thereof.

In embodiments, the sulfonated block copolymer coating is applied by preparing a solution / dispersion of the polymer in a suitable solvent, then casting on the substrate, with a sufficient thickness of the layer / film being adjusted with a casting knife, followed by drying. In embodiments, the outer layer containing the sulfonated block copolymer is formed on the substrate by methods including but not limited to spray coating, electro-coating, electro-spinning, direct coating, transfer coating, dip coating, slot-die coating, and the like. Multiple coatings / layers can be applied on the substrate depending on desired thickness and end-use applications.

The substrate can be coated with the sulfonated block copolymer as individual pieces, forming pages in notebooks, erase boards, etc. Alternatively, a large piece of the substrate is coated with the sulfonated block copolymer and the large piece is then cut into desired sizes and shapes forming marking surfaces.

In embodiments, the sulfonated block copolymer is applied onto the substrate as a peel-and-stick film to form the outer layer. In the peel-and-stick form, the sulfonated block copolymer is in the form of a laminate having at least two layers with a sulfonated block copolymer layer and a support / release liner. The support / release liner is peeled off and the sulfonated block copolymer layer is applied onto the substrate forming a marking surface.

In embodiments, the sulfonated block copolymer is applied onto the substrate as a coating / layer, or as a self-adhesive film, for an erasable outer layer for writing or marking, having a thickness of at least 1 µm, > 5 µm, or > 10 µm, or < 500 µm, or < 200 µm, or < 100 µm, or < 10 mm, or 10 µm - 5 mm, or 1 µm - 1mm, or 50 µm - 2 mm, or 1 - 100 µm. The outer layer of the sulfonated block copolymer can have any of a "smooth finish" or "hard finish" so as to minimize indentation made by writing instruments and maximize the number of times it can be reused.

### (Marking Material)

The marking material can be applied as an ink, e.g., in writing instruments such as ball pens, fountain pens, gel pens, markers, felt tip pens, and the like, or as a paint, a colorant.

Non-limiting examples of the marking material can include the ink from cartridges used in printers; ink based on oil or water-based containing additives for certain color effect, e.g., carbon black for black ink, phthalocyanine blue for blue ink; non-thermochromic; or thermochromic ink. The ink can be liquid or solid, e.g., a piece of charcoal.

The marking material can also be applied as a paint, e.g., ink, acrylic paints, oil-based paints, watercolors, gouache paints, encaustic paints, spray paints, pastel colors, crayons, etc. The marking material can be a nail polish.

### (Cleaning Fluid)

To erase / remove markings from the marking surface, a cleaning fluid is used. The selection depends on the marking material, e.g., ink or paint, and amount of time elapsed since marking was made (or how long for it to dry up). The cleaning fluid in embodiments is selected from solvents and solutions readily available to consumers, e.g., water, isopropyl alcohol (IPA at > 90% concentration), rubbing alcohol (- 70% IPA), acetone, and the like. Other known cleaning fluids for removing markings can also be used, e.g., alcohols such as ethanol, acetoacetates, glycol ethers, glycol esters, terpenes, methyl ethyl ketone, etc.

In embodiments, a wipe is used for erasing or removing the marking. The wipe can be in the form of towelette, absorbent sheet, fabric, sponge, paper, absorbent polymer, and mixtures thereof. The wipe has a sufficient amount of the cleaning fluid to make the wipe damp, moist, or soaked wet. In embodiments, the wipe contains > 5, or > 10, or > 20, or > 30, or > 40 wt.% cleaning fluid, based on total weight of the wipe.

### (Methods for Removing Markings)

In embodiments, straight water is used to remove or erase markings made with any of pens, Indian ink, or acrylic paints. By using water, markings can be removed to > 50%, or > 60%, or > 80%, or up to 100% from marking surface with a wipe (damp or soaked wet with water). The wipe can be applied against the marking with light shear force, e.g., after a few wipes / rubs, or < 5 wipes, or < 10 wipes, or < 20 wipes., to slightly stronger shear force as in repeated rubs for < 5 min, or < 3 min, or < 1 min, or > 30 sec.

In embodiments markings can be erased from the marking surface with a wipe moist with a cleaning fluid after wiping for ≤ 5 min, or ≤ 2 min, or ≤ 1 min.

For some of marking materials, e.g., Indian ink, oil-based paint, or print markings made by printer ink, if > 50% of the marking cannot be removed with water, then other cleaning fluids, e.g., isopropyl alcohol (IPA) or rubbing alcohol (70% IPA), etc. can be applied to remove the rest of the marking from the marking surface within a few minutes of rubbing. In embodiments with the marking material being a nail polish, the marking can be removed by rubbing with a wipe soaked moist with acetone.

In embodiments, the cleaning fluid is selected depends on a drying time (i.e., time elapsed since the marking with the marking material) of the marking material on the marking surface. For example, markings made with an ink of a ball point pen can be easily removed from the marking surface by using water, when a wipe moist with water is rubbed on the marking surface within a first predetermined duration, e.g., a few hours, of making on the marking surface. However, a different cleaning fluid, e.g., rubbing alcohol or IPA, etc., can be used instead of or in addition to water to quickly erase or completely remove dried out marking made, e.g., after 24 hours or after a few days since the surface was first marked, and provided the marking cannot be quickly removed with water.

When the cleaning fluid is water in embodiments, at least 50%, or at least 70%, or at least 80%, or at least 90% or up to 100% of the marking material is erased from the marking surface with the wipe moist with water after wiping for < 5 min, or < 3 min, or < 1 min.

### (Properties of Reusable Marking Surface Comprising Sulfonated Block Copolymer)

In embodiments, the outer layer containing the substrate (i.e., the marking surface) coated with the sulfonated block copolymer is characterized as being transparent. Transparency refers to optical clarity, meaning that enough light is transmitted through to allow visualization through the film by an observer. Although some haze or coloration can be present, such haze or coloration does not substantially interfere with visualization for a marking surface. In embodiments, the outer layer has a transmittance of > 90%, or > 94%; or clarity of > 99% or > 99.5%; or a haze value of < 1.5%, or < 1.25%, or < 1.0%, or < 0.75%. Haze can be measured according to ASTM D-1003.

In embodiments, the outer layer containing the sulfonated block copolymer has a surface pH of < 5, or < 3.0, or < 2.5, or < 2.25, or < 2.0, or < 1.80.

The marking surface having the outer layer containing the sulfonated block copolymer is erasable, meaning that > 50%, or > 60%, or > 70%, or > 80%, or > 90%, or up to 100% of markings (or pre-existing ink) on the marking surface is removed after the first wiping or rubbing the marking surface for < 5 min, or < 2 min, or < 1 min, or > 10 sec. with a wipe that is moist / saturated with the cleaning fluid.

In addition to the erasable characteristics, the marking surface as coated with the sulfonated block copolymer works effectively in destroying / inactivating > 90% of microbes (1 log₁₀ CFU or colony forming unit), or > 95%, or > 99% (2 log₁₀ CFU), or at least 99.5%, or at least 99.9% (3 log₁₀ CFU) of microbes in < 30 min of exposure, or < 5 min in contact with the marking surface, as disclosed in Published Patent No. AU2021102026A4. The microbes include but are not limited to MRSA (Methicillin-resistant Staphylococcus aureus), vancomycin-resistant Enterococcus faecium, X-MulV, PI-3, SARS-CoV-2, carbapenem-resistant Acinetobacter baumannii, and influenza A virus. In embodiments, the erasable marking surface is effective in killing microbes including Staphylococcus aureus, Escherichia coli, Staphylococcus albus, Escherichia coli, Rhizoctonia solani, Fusarium oxysporum, and the like. The erasable marking surface remains effective in killing microbes for extended use, even after 4 hrs., or after 12 hrs., or at least 24 hrs., or for at least 48 hrs.

In tests simulating cleaning or wiping an erasable marking surface containing an outer layer having a sulfonated block copolymer, the layer retains its antimicrobial effectiveness after 2400 cleaning or abrasion cycle, representing 200 days (> 6 months) in use with 6 cleaning sessions per day (with 4 rubbing motions per session using alcohol and / or quaternary ammonium compound cleaners).

### (Applications)

The erasable and reusable marking surface can be used for typical writing instruments, e.g., notebooks, artist easels, sketches, etc., which in the prior art made with papers to be discarded or recycled after filled with marking or writing. It can also be particularly useful for making erase boards, writing boards, etc., in conference rooms, meeting rooms, etc., for use with practically any type of writing instruments, and without the need for special ink or pens as in the prior art writing boards.

It can be appreciated that with the use of the sulfonated block copolymer as the outer layer, there are other applications for reusable or erasable marking surfaces, e.g., skateboards, exhibition displays, temporary building wall art, street art, etc., where temporary artistic sketches or paintings can be provided and removed after display for a certain period. Further, due to the antimicrobial / self-sterilizing characteristics of the sulfonated block copolymer, the reusable marking surface has applications in medical facilities, e.g., medical pouches, clip boards, notepads for surgical rooms, examination rooms, etc. The marking surface can also be useful in public facilities with repeat exposures to germs, requiring frequent cleaning, e.g., student desks with writeable surfaces, wallpapers for nurseries, or daycare centers, etc.

### (Examples)

The following examples are intended to be non-limiting.

In all examples, the marking surface is a laminate from Kraton Corporation, having one surface (one side) being coated with a sulfonated block copolymer, on a substrate comprising a microporous polyethylene film thermally bonded to a polyethylene / PET bicomponent nonwoven ("Kraton Marking Surface," or KMS pages). The sulfonated block copolymer is a poly(p-tert-butylstyrene-b-styrenesulfonate-b-p-tert-butylstyrene), with IEC of about 1 meg/q.

### (Example 1)

In this example, erasability of marking surfaces with various types of marking materials is illustrated as shown in the figures.

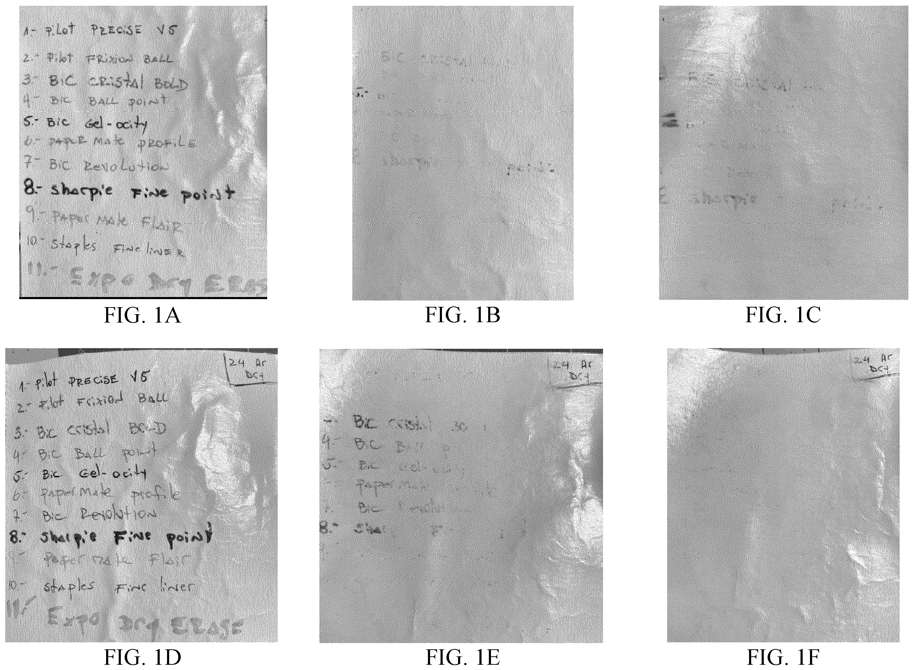

FIG. 1A shows a page of KMS after writing with 11 different writing instruments: 1. Pilot precise V5 pen; 2. Pilot frixion ball pen; 3. BIC cristal bold pen; 4. BIC ball point pen; 5. BIC gel-olicy pen; 6. Paper mate profile pen; 7. BIC revolution pen; 8. Sharpie fine point pen; 9. Paper mate flair pen; 10. Staples fine liner pen; and 11. Expo dry erase pen. Multiple pages were made and written with the 11 different marking materials.

FIG. 1B shows the page of FIG. 1A, after being quickly wiped with water (1 wipe or 1 rubbing) 5 min after the writing was made.

FIG. 1C shows the page of FIG. 1A, after being quickly wiped with rubbing alcohol 5 min after the writing was made.

FIG. 1D shows the page of FIG. 1A, 24 hours after writing.

FIG. 1E shows the page of FIG. 1D (24 hours after initial writing), after being quickly wiped with water (1 wipe or 1 rubbing)

FIG. 1F shows the page of FIG. 1D (24 hours after initial writing), after being quickly wiped with rubbing alcohol.

### (Example 2)

This example illustrates embodiments of marking surfaces printed with inkjet (Epson) inks, and with the surfaces being re-used for a 2^{nd} print.

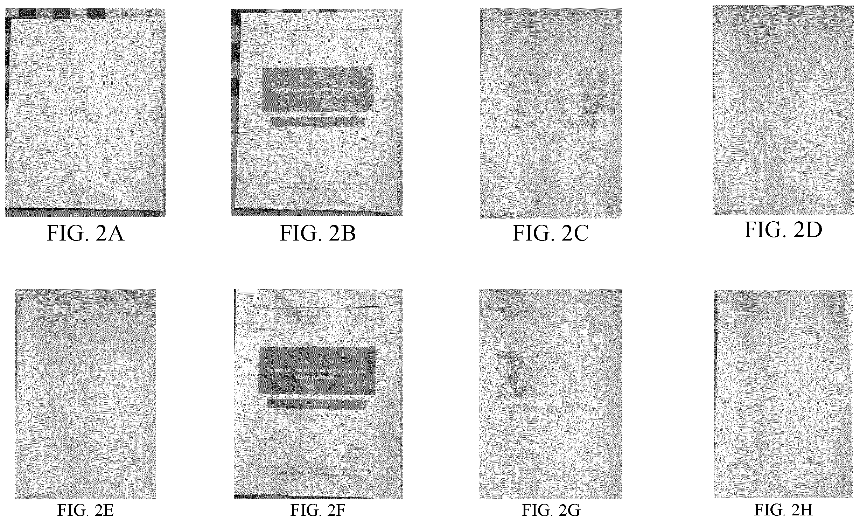

FIG. 2A shows a KMS page as is (fresh and clean copy), multiple copies are made.

FIG. 2B shows the page in FIG. 2A after printing with Epson ink-jet printer.

FIG. 2C shows the page in FIG. 2A after being cleaned / wiped quickly (1 rub) with a rag soaked with water.

FIG. 2D shows the page in FIG. 2A after being wiped quickly (1 rubbing) with a rubbing alcohol.

FIG. 2E shows the page of FIG. 2D, to be used again for printing ("reused KMS"), multiple reused KMS pages are made.

FIG. 2F shows the reused KMS of FIG. 2E, after print with Epson ink-jet printer.

FIG. 2G shows the reused KMS of FIG. 2F, after being quickly wipe (1 rubbing) with water.

FIG. 2H shows the reused KMS of FIG. 2F, after being quickly wipe (1 rubbing) with rubbing alcohol.

### (Example 3)

In this example, erasability of marking surfaces with various types of paints is illustrated.

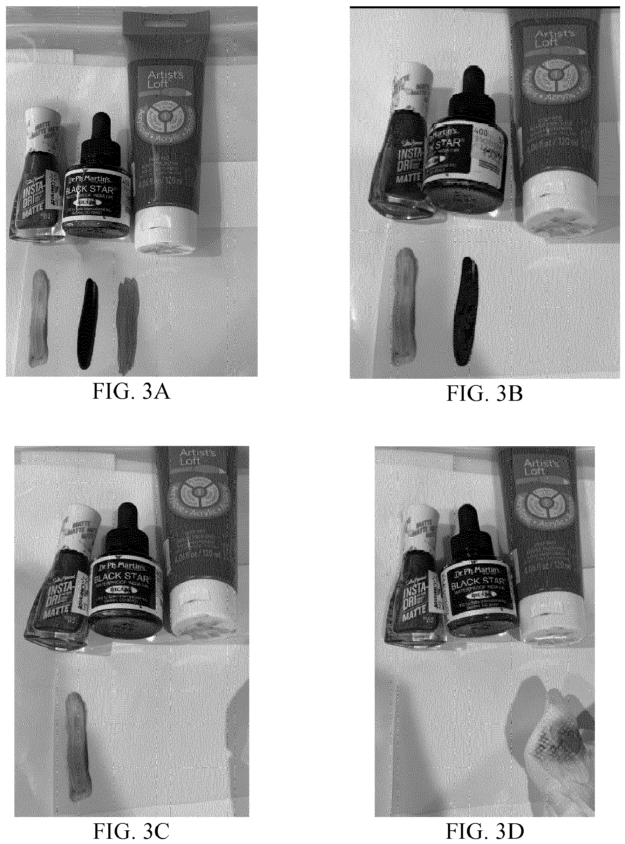

FIG. 3A shows a KMS page as applied with: nail polish (Sally Hansen^{™} Insta-Dry Matte), India ink (Black Star^{™} waterproof), and acrylic paint. Multiple pages are painted.

FIG. 3B shows the KMS page in FIG. 3A, after being quickly wiped with a water-soaked paper towel, showing removal of acrylic paint.

FIG. 3C illustrates the KMS page in FIG. 3A, after being quickly wiped with a paper towel soaked with rubbing alcohol, showing removal of both India ink and acrylic paint.

FIG. 3D illustrates the KMS page in FIG. 3A, after being quickly wiped with a paper towel soaked with acetone, removing all paint markings.

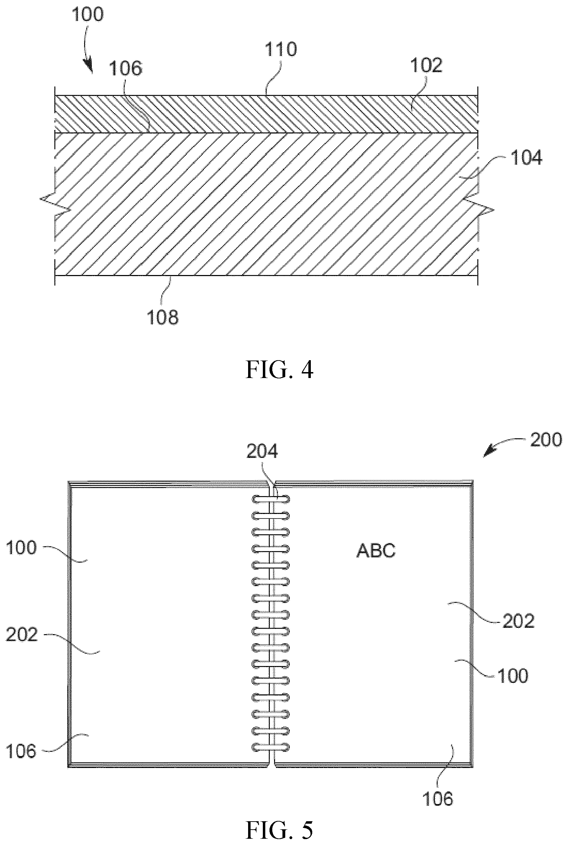

Other examples are illustrated in FIG. 4 -21, with various embodiments of marking surfaces coated or laminated with sulfonated block copolymers. The marking surface can be used interchangeably with "marking laminate."

FIG. 4 illustrates an embodiment of a sectional construction of a marking laminate 100, with an outer layer 102 containing a sulfonated block copolymer on a substrate 104. As shown, the substrate 104 has a first surface 106 and a second surface 108 disposed opposite to the first surface 106. The first surface 106 is a substantially flat surface, and the sulfonated block copolymer is coated or applied on the first surface 106 as outer layer 102. The outer layer 102 defines a marking surface 110, enabling a user to provide markings with a marking material. In some embodiments, a second outer layer (not shown) containing the sulfonated block copolymer is provided on the second surface 108 of the substrate 104 to define a second marking surface (two-sided pages for writing or marking). In embodiments if desired, additional "fresh" or new layers of the sulfonated block copolymer can be applied onto the outer layer as time goes on, to replace outer layer 102 (after it is removed) or on top of the outer layer 102 as a "fresh" layer, extending the life of the erasable and reusable marking surface.

FIG. 5 illustrates a notebook 200 having a plurality of pages 202 and a binding 204 holding the pages 202 together. Marking made on the pages 202 using a writing instrument, for example, a pen. Each page 202 comprises laminate 100 having a substrate, with at least one outer layer comprising the sulfonated block copolymer on the substrate defining marking surface 106. After writing, the pages can be optionally scanned and stored as digital files. Thereafter, the markings are erased for re-using the notebook 200 for writing.

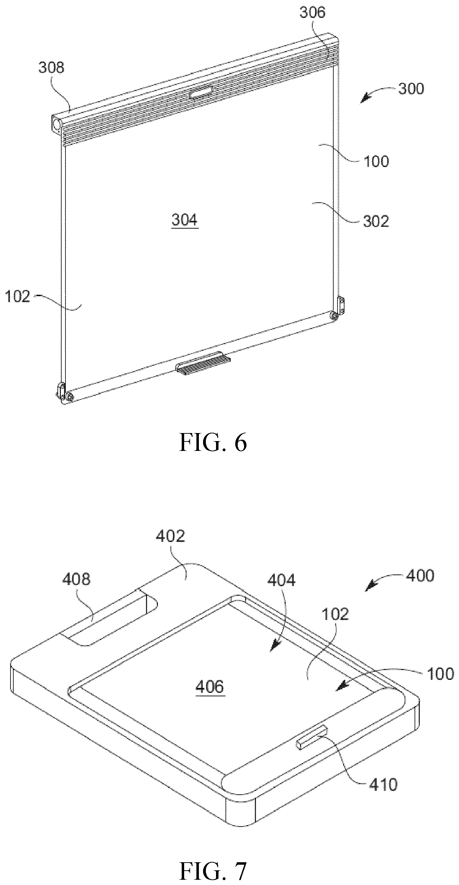

FIG. 6 illustrates an erase board 300 suitable to be used in a conference room. The erase board 300 is adapted to be mounted on a wall of the conference room and includes a whiteboard 302 as the marking laminate 100 having an outer layer 102 comprising a sulfonated block copolymer defining a marking surface 304 of the whiteboard 302. The erase board 300 includes a wipe 306 arranged in a roller configuration and adapted to be pulled down for removing the markings from the marking surface 304. For soaking the wipe 306 with a suitable cleaning fluid, a cleaning fluid (container not shown) can be provided inside a roller 308 on which the wipe 306 is rolled. The markings on the marking surface 304 can be provided using a marker (not shown).

FIG. 7 illustrates a handheld writing board 400. The handheld writing board 400 includes a frame 402 and a whiteboard 404 supported by the frame 402. The frame 402 is arranged surrounding the whiteboard 404 defining a marking surface 406 on which markings can be provided by a user using a suitable pen. The frame 402 includes a handle 408 to enable a holding of the writing board 400 by the user. Marking laminate 100 having an outer layer 102 comprising a sulfonated block copolymer defining marking surface 406. As shown, the writing board 400 includes a shelf 410 to support a wipe. The writing board can be reused for writing by removing the markings from the marking surface 406 by rubbing a wipe moist with a suitable cleaning fluid on the marking surface 406.

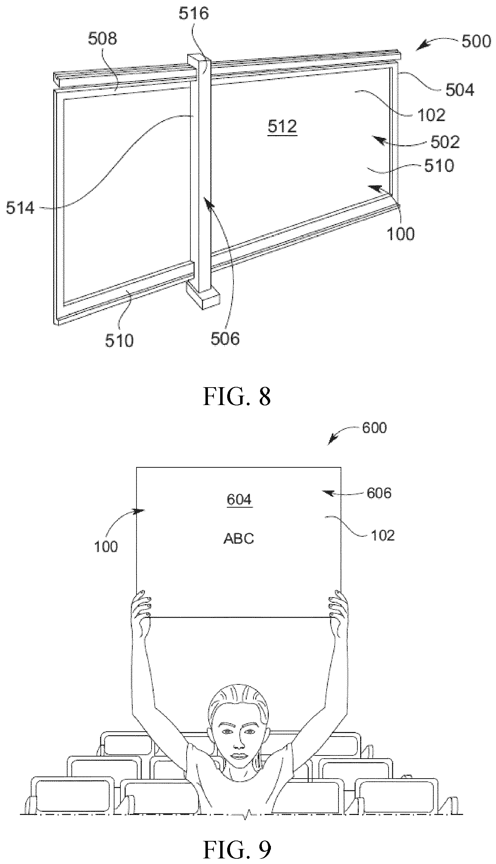

FIG. 8 illustrates a board 500 adapted to be arranged inside a classroom or a conference room. The board 500 includes a writing board 502, an outer frame 504 surrounding and supporting the writing board 502, and a wiper 506 movably supported on the outer frame 504 and extending from an upper end 508 of the writing board 502 to a lower end 510 of the writing board 502. A marker holder 510 is provided across the bottom of the writing board. The writing board 502 is provided with an outer coating layer 102 comprising a sulfonated block copolymer, defining marking surface 512. After writing on the marking surface 512, the user actuates the wiper 506, moving wiper 506 across the writing board 502 to erase any marking. The wiper 506 includes a rubbing portion 514 formed of suitable materials, and a storage chamber 516 for storing a suitable cleaning fluid. As the wiper 506 is actuated moving across marking surface 512, the cleaning fluid is provided to the rubbing portion 514 to saturate / moisten rubbing portion 514 for removal of marking, enabling a reuse of the board 500. The wiper 506 can be manually moved by the user, or with suitable actuators (not shown) to activate the wiper lateral move. In embodiments, before markings are removed from marking surface 512, an image capturing device (not shown) can be actuated to take an image of the marking surface, with the captured image is digitally saved. The image capturing device can also be actuated automatically in response to the actuation of the wiper 506.

FIGS. 9 to 11 illustrate different embodiments of writing structure 600. The rollable writing structure 600 can be in a rolled position (shown in FIGS. 10 and 11), or in a straight position (shown in FIGS. 9 to 11). Writing structure 600 includes a back layer 602 made of an elastic or a flexible material to enable a rolling of the writing structure 600 and unwinding of the writing structure 600. In the rolled position, the writing structure 600 can be rolled to enable easy transportation. While in the straight position, marking surface 604 stays flat for making markings on the marking surface 604.

As shown in FIG. 9, to facilitate writing, writing structure 600 includes a whiteboard layer 606 with marking laminate 100 having an outer layer 102 comprising a sulfonated block copolymer. The outer layer 102 defines marking surface 604 for writing.

FIG. 10 illustrates the writing structure 600 in a roll-up form and in a flat form. The structure 600 comprises a back layer 602. There are fasteners 610 on a rear surface 612 to help keep the writing structure in the rolled position. The fasteners 610 are elongated strips 614 provided along two edges of the writing structure 600. In another embodiment as shown in FIG. 11, the fasteners 610 are not strips, but instead in the form of tabs 616 in corners of the rear surface 612.

FIG. 12 illustrates a clip board 900 mounted to a computer 902. The clip board 900 includes a whiteboard 904 defining a marking surface 906 on which a user can write, and a frame 908 supporting the whiteboard 904. The whiteboard 904 comprises substrate 100 with an outer layer 102 containing a sulfonated block copolymer defining marking surface 906. Further, the clip board 900 includes an engagement structure 910, for example, a hook or a clip, to mount clip board 900 to computer 902. The engagement structure 910 can be removably attached or integrally formed with the frame 908. Although the clip board 900 is shown to be mounted to a monitor of the computer 902, it can be appreciated that the clip board 900 can be mounted at any location, for example, on a frame of a hospital bed, for medical personnel to write notes related to the patient conditions. After writing on the clip board 900, the markings can be digitized by scanning the marking surface 906 of the clip board 900. Thereafter, the clip board can be reused by erasing the markings from the marking surface 906 by rubbing with a wipe moist with a suitable cleaning fluid (not shown).

FIG. 13 illustrates an art structure (easel) 1000 suitable for making drawings or paintings. The art structure 1000 comprises marking surface 100 with an outer layer 102 comprising a sulfonated block copolymer. The outer layer 102 defines marking surface 1002 on which a user can draw or paint using suitable inks / colors, for the paint to be subsequently removed with a wipe, and the easel can be reused.

FIG. 14 shows a fillable form 1100. The fillable form 1100 comprises a marking laminate 100 with preprinted paper. The substrate 104 of the preprinted paper has an outer layer comprises a sulfonated block copolymer, defining marking surface 1102 of the fillable form 1100 on which a user writes the requisite information corresponding to each field. Upon filling out the form 1100, it can be scanned using a suitable scanner to capture the information provided in a digital file. Thereafter, the form 1100 can be reused by removing the markings from the outer layer.

FIG. 15 illustrates a sticky note 1200 removably attached to a surface, e.g., an appliance such as refrigerator 1202. The sticky note 1200 comprises a marking surface 100 with an adhesive attached to a rear side of the sticky note. The adhesive can be a temporary adhesive to facilitate an engagement and removal of the stick note 1200 to a surface a plurality of times. The sticky note 1200 comprises an outer layer containing a sulfonated block copolymer, defining marking surface 1204. The sticky note 1200 can be reused by removing the markings from the marking surface 1204 by simply wiping with a cleaning fluid.

FIG. 16 illustrates a label 1300 attached to a storage container 1302 is shown. The label 1300 includes a laminate 100 having paper as the substrate and an outer layer 102 containing a sulfonated block copolymer defining the marking surface 1304 of the label 1300. The label 1300 includes an adhesive layer (not shown) on a rear surface to enable attachment of the label 1300 to the storage container 1302. As the markings on the label 1300 can be erased, the label 1300 can be reused, thereby eliminating a need to change / replace the label 1300 each time a different article is stored inside the storage container 1300.

FIG. 17 illustrates a desk 1400 suitable for use in classrooms having laminate 100 for the desk surface. Substrate 1404 is made out of wood, metal, or plastic, with an outer layer 102 comprising a sulfonated block copolymer defining the marking surface 1402 of the desk 1400. The desk 1400 has legs 1410 and a bench / chair 1412 integrally formed with the desk. Students can directly write / mark on the tabletop, i.e., a marking surface 1402, with an marking material. The markings can be removed / erased using a suitable cleaning fluid.

FIG. 18 illustrates a wallpaper 1500 arranged on a wall 1502 of a room 1504, e.g., in a hospital with the need for antimicrobial surface that is easy to clean / write on. The wallpaper 1500 is a laminate 100 having an outer layer 102 comprising a sulfonated block copolymer, defining marking surface 1506 on which markings can be provided using an marking material. Markings or writing on the wallpaper can be removed / erased by using a cleaning fluid.

FIG. 19 illustrates a greeting card 1600 having a first flap 1602 and a second flap 1604. Second flap 1604 is a laminate 100 having an outer layer 102 comprising a sulfonated block copolymer defining marking surface 1606 on which a user writes. Although, the outer layer 102 is contemplated on the second flap 1604, it can be appreciated that similar layers comprising the sulfonated block copolymer can be provided on the inner and outer surface of the first flap 1602 and the second flap 1604. The greeting card 1600 can be reused by removing the ink markings from the marking surface 1606 by rubbing the marking surface 1606 with a wipe moist with a suitable cleaning fluid.

FIG. 20 illustrates a surgical pouch 1700 having a reusable / erasable marking surface. The surgical pouch 1700 facilitates a storing of test samples, surgical instruments, etc., with a substrate 100 having an outer layer 102 comprising a sulfonated block copolymer defining marking surface 1702. After storing articles in the pouch, the marking surface 1702 can be marked (or labeled or written) with using a suitable marking material. The sulfonated block copolymer outer layer facilitates a reuse of the pouch 1700 by removing the markings with a moist wipe, preferably with rubbing alcohol in a medical environment. Also, the sulfonated block copolymer of the outer layer 102 provides self-disinfecting properties to the pouch 1700, restricting transmission of microbes.

FIG. 21 illustrates a wrap or an envelope 1800 for enclosing a package. The envelop 1800 has laminate 100 provided with an outer layer 102 comprising a sulfonated block copolymer. The outer layer 102 defines a marking surface 1802 of the envelope for writing, labeling, or markings, to be removed by rubbing the marking surface 1802 with a moist wipe.

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A laminate for marking comprising:
a substrate having a marking surface to facilitate markings with a marking material;
the marking surface comprises an outer layer containing a sulfonated block copolymer, wherein the sulfonated block copolymer has an ion exchange capacity (IEC) of at least 0.5 meq/g;
the outer layer containing the sulfonated block copolymer has a thickness of at least 1 µm; and
wherein at least 50% of the markings can be erased from the marking surface with a wipe moist with a cleaning fluid after wiping for less than 5 min.

2. The laminate of claim 1, wherein the sulfonated block copolymer has an ion exchange capacity (IEC) of 1.0 to 2.6 meq/g.

3. The laminate of any of claims 1-2, wherein the cleaning fluid is selected from the group consisting of water, isopropyl alcohol, rubbing alcohol, acetone, and mixtures thereof.

4. The laminate of any of claims 1-3, wherein the sulfonated block copolymer has a degree of sulfonation of 10 to 100 mol%, based on polymer blocks susceptible to sulfonation.

5. The laminate of any of claims 1-4, wherein at least 80% of markings can be erased from the marking surface with a wipe moist with the cleaning fluid after wiping for less than 2 min.

6. The laminate of any of claims 1-5, wherein when the cleaning fluid is water, and at least 50% of the markings can be erased from the marking surface with the wipe moist with water after wiping for less than 5 min.

7. The laminate of any of claims 1-6, wherein the wipe is selected from the group consisting of towelette, absorbent sheet, fabric, sponge, paper, absorbent polymer, and mixtures thereof.

8. The laminate of any of claims 1-7, wherein the wipe contains the cleaning fluid in an amount of greater than 1 wt.%, based on total weight of the wipe.

9. The laminate of any of claims 1-8, wherein the marking material is selected from the group consisting of inks, acrylic paints, oil-based paints, watercolors, gouache paints, encaustic paints, spray paints, pastel colors, crayons, nail polish, and mixtures thereof.

10. The laminate of any of claims 1-9, wherein the substrate is selected from the group consisting of synthetic paper, standard paper, waterproof paper, recycled paper, glass, plastic materials, canvas, wood, woven fabric, non-woven fabric, fibers, and mixtures thereof.

11. The laminate of any of claims 1-10, wherein the outer layer containing the sulfonated block copolymer has a thickness of 10 µm to 5 mm.

12. The laminate of any of claims 1-11, wherein the outer layer containing the sulfonated block copolymer is formed on the marking surface by any of spray coating, electro-coating, electro-spinning, direct coating, transfer coating, dip coating, or slot-die coating, wherein a composition comprising the sulfonated block copolymer partially or fully dissolved in a solvent in an amount of 1 to 10 wt.%, based on total weight of the solvent, and wherein the solvent is selected from the group consisting of water, isopropyl alcohol, acetone, N,N-dimethylacetamide, 1-methyl-2-pyrrolidinone, 1,3-dioxolane, 2-methoxy ethanol, dimethylformamide, benzyl alcohol, cyclopentane, cyclohexane, cycloheptane, cyclooctane, hexane, heptane, nonane, decane, paraffinic oil, methyl-tert-butyl ether, tetrahydrofuran (THF), dioxan, ethyl acetate, dimethylsulfoxide (DMSO), dimethylformamide (DMF), methanol, ethanol, propanol, butanol, toluene, xylene, and mixtures thereof.

13. The laminate of any of claims 1-12, wherein the sulfonated block copolymer is a sulfonated styrenic block copolymer obtained by sulfonation of a styrenic block copolymer precursor, and wherein the styrenic block copolymer precursor has a general configuration of A-B-A, (A-B)n(A), (A-B-A)n, (A-B-A)nX, (A-B)nX, A-D-B, A-B-D, A-D-B-D-A, A-B-D-B-A, (A-D-B)nA, (A-B-D)nA (A-D-B)nX, (A-B-D)nX, (A-D-B-D-A)nX, (A-B-D-B-A)nX, or mixtures thereof; wherein n is an integer from 2 to 30, and X is a residue of a coupling agent; and wherein:
each block A comprises polymerized para-substituted styrene monomers selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof;
each block B comprises the polymerized vinyl aromatic monomers selected from the group consisting of unsubstituted styrene, ortho-substituted styrene, meta-substituted styrene, alpha-methylstyrene, 1,1-diphenylethylene, 1,2-diphenylethylene, and mixtures thereof; and
each block D comprises the polymerized conjugated diene monomers selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

14. An article comprising the laminate of any of claims 1-13.

15. The article of claim 14, wherein the article is selected from a notebook, an erase board, a class-board, a handheld writing board, a rollable writing structure, a clip board, an art structure, a fillable form, a sticky note, a label, a desk, a wallpaper, a greeting card, a surgical pouch, and an envelope.
